## Europäisches Patentamt

## European Patent Office

## Office européen des brevets

(19)

(11) Numéro de publication: **0 111 610**
**B1**

(12) **FASCICULE DE BREVET EUROPEEN**

(45) Date de publication du fascicule du brevet:
27.11.85

(51) Int. Cl.⁴: **B 01 J 37/02,** B 01 D 53/30,
B 01 D 53/36

(21) Numéro de dépôt: **82402323.8**

(22) Date de dépôt: **17.12.82**

(54) Support de catalyseur, notamment de catalyseur de post-combustion et procédé de fabrication de ce support.

(43) Date de publication de la demande:
**27.06.84 Bulletin 84/26**

(45) Mention de la délivrance du brevet:
**27.11.85 Bulletin 85/48**

(84) Etats contractants désignés:
**BE DE GB IT NL SE**

(56) Documents cités:
**FR - A - 2 039 527**
**FR - A - 2 240 049**
**FR - A - 2 245 410**
**FR - A - 2 265 448**
**FR - A - 2 347 976**
**FR - A - 2 507 920**
**US - A - 4 289 652**

(73) Titulaire: **RHONE-POULENC SPECIALITES CHIMIQUES,**
**"Les Miroirs" 18, Avenue d'Alsace, F-92400 Courbevoie**
**(FR)**

(72) Inventeur: **Magnier, Claude, 3, rue des Chaufourniers,**
**F-75019 Paris (FR)**

(74) Mandataire: **Savina, Jacques et al, RHONE-POULENC**
**RECHERCHES Service Brevets Chimie et**
**Polymères 25, quai Paul Doumer, F-92408 Courbevoie**
**Cédex (FR)**

ACTORUM AG

## Description

La présente invention concerne un support de catalyseur, notamment de catalyseur de post-combustion, et un procédé de fabrication de ce support.

On sait que les supports de catalyseurs, et en particulier, les supports de catalyseurs de post-combustion, sont constitués en général d'oxydes minéraux sous forme agglomérée ou bien déposés sur un substrat qui est soit une céramique, soit métallique. On préfère en général les substrats métalliques, car leur tenue mécanique est supérieure. Pour les catalyseurs déposés sur substrats, compte tenu des fortes températures, de l'ordre de 1000°C, auxquelles ils fonctionnent, on est conduit à utiliser des substrats en acier, notamment en aciers inoxydables et réfractaires. On emploie couramment par exemple des aciers au nickel et au chrome.

Il s'avère en fait que le dépôt du support, notamment l'alumine, sur de tels substrats est très difficile. Ces difficultés sont dues à l'absence de micro-porosité du substrat permettant l'accrochage et au manque d'affinité chimique entre le support et le substrat.

De nombreux procédés ont été proposés pour remédier à ces difficultés.

Par exemple, il est possible de former l'alumine *in situ* par oxydation d'alliages contenant de l'aluminium. L'inconvénient de ce procédé est que de tels alliages sont très chers.

Par ailleurs, il est possible de déposer l'alumine sous forme d'un mélange $Al_2O_3 + Al(H_2PO_4)_3$. Cependant, ce procédé ne peut être valablement utilisé que sur certains aciers, notamment les aciers non-inox, le nickel gênant en effet la phosphatation.

L'objet de l'invention est donc un support de catalyseur sur substrat en acier dans lequel la tenue du support au substrat soit excellente.

Dans ce but, le support de catalyseur de l'invention, du type comprenant un substrat métallique et une couche d'alumine déposée sur celui-ci, est caractérisé en ce qu'il comporte en outre une couche de chrome disposée entre le substrat et la couche d'alumine, le substrat étant en acier.

Selon l'invention, le procédé de fabrication du support de catalyseur précité est caractérisé en ce qu'on utilise un substrat en acier et en ce qu'on dispose d'abord une couche de chrome sur ledit substrat et ensuite une couche d'alumine sur ladite couche de chrome.

La couche d'alumine du support de catalyseur de l'invention résiste particulièrement bien au décollement, même lors du pliage du substrat.

D'autres caractéristiques et avantages de l'invention seront mieux compris à la lecture de la description et des exemples concrets mais non limitatifs qui vont suivre.

Le substrat du support de catalyseur de l'invention est en acier. Différents types d'acier pourront être utilisés sans sortir du cadre de l'invention. Le choix de l'acier se fera en fonction des conditions d'utilisation du catalyseur. En particulier, pour les catalyseurs de post-combustion, on utilisera des aciers capables de résister aux températures élevées et aux conditions rigoureuses rencontrées dans les systèmes de gaz d'échappement des véhicules, par exemple des aciers inoxydables et réfractaires.

On pourra ainsi utiliser des aciers contenant de 16 à 30% en poids de chrome; de 18 à 25% en poids de chrome et de 8 à 20% en nickel avec éventuellement des traces de molybdène, titane, niobium.

Selon un mode particulier de réalisation de l'invention, on utilise à titre de substrat un acier inoxydable et réfractaire à 25% en poids de chrome et 13% en poids de nickel. Ce type d'acier est avantageux car il présente notamment une bonne tenue mécanique et thermique.

Le substrat pourra avantageusement être sous forme monolithe. En particulier, le substrat pourra être déformé mécaniquement de manière à présenter une surface spécifique augmentée par rapport à celle d'un substrat non déformé pour la même unité de volume. Le monolithe pourra ainsi être déformé de manière à présenter des ondulations, il sera ensuite enroulé en spirale pour former un tube qui pourra être placé dans un pot d'échappement.

La couche de chrome qui est disposée sur le substrat présente une épaisseur de quelques microns environ, de préférence 1 μm.

La couche d'alumine a une épaisseur de quelques dizaines de μm environ, de préférence de 10 à 30 μm.

On pourra utiliser tout type d'alumine convenable pour ses propriétés de support catalytique. Ainsi, selon un mode particulier de réalisation de l'invention, on met en œuvre comme alumine, une boehmite fibrillaire de surface spécifique supérieure à 200 m²/g. On pourrait aussi utiliser une alumine de type gibbsite.

Le procédé de fabrication du support de catalyseur selon l'invention va maintenant être plus particulièrement décrit.

Le substrat subit tout d'abord un décapage, notamment à l'aide d'un mélange chloro-sulfurique.

Le substrat ainsi traité est ensuite chromé. Le chromage se fera de préférence dans des conditions telles que l'on obtienne un chromage dit «mat», relativement hétérogène. Le chromage peut être effectué électrolytiquement par passage dans un bain de chromage de composition classique, à base d'acide chromique et d'acide sulfurique et pouvant contenir un ou plusieurs adjuvants usuels. La durée du chromage peut être variable suivant l'épaisseur de chrome que l'on veut déposer. Comme cela a été vu plus haut, la couche de chrome aura avantageusement une épaisseur de quelques microns.

Le chromage pourra se faire en continu. A la suite du chromage, le monolithe est calandré et ondulé éventuellement.

A l'issue du chromage, le monolithe doit ensuite être imprégné avec l'alumine.

Le dépôt de l'alumine pourra se faire de différentes façons, notamment par trempage du monolithe dans une solution d'alumine ou par pulvérisation de cette solution sur le monolithe chauffé. La solution peut être une solution de 5% à 15% en poids contenant éventuellement, dans le cas du trempage, une certaine quantité d'un agent tensio-actif, de l'ordre de 0,5% à 3%, notamment 1% en poids. Ce tensio-actif a pour rôle de faciliter le séchage ultérieur de l'alumine et d'éviter des décollements de celle-ci par rapport au substrat. Ce peut être, par exemple, un alcool lourd type «Cemulsol».

On doit noter qu'avant de procéder au dépôt de l'alumine sur le substrat chromé, il sera souhaitable de dépassiver celui-ci. En effet, après le chromage, il se produit une oxydation au niveau de la couche de chrome. Cette oxydation peut être très néfaste pour la tenue de l'alumine sur le substrat.

La dépassivation peut se faire par exemple par traitement à l'acide chlorhydrique. Ce traitement peut s'effectuer par trempage dans une solution d'acide chlorhydrique normale pendant quelques secondes à 90°C.

Bien que cela soit moins intéressant au niveau industriel, il est possible de prévenir l'oxydation par dépôt sur le substrat chromé d'une couche de gomme soluble à l'eau. Cette couche est enlevée à l'eau au moment du dépôt de la couche d'aluminium.

Après le dépôt d'alumine par trempage, le support de catalyseur est séché à l'air puis à l'étuve, par exemple vers 110°C.

A l'issue du séchage ou après la pulvérisation précitée, le support de catalyseur est calciné à une température de 600°C environ.

On obtient ainsi un support de catalyseur présentant une excellente tenue au substrat.

Le support ainsi obtenu pourra ensuite être imprégné avec le catalyseur proprement dit, par exemple du platine. On peut noter qu'il serait éventuellement possible de déposer le platine en même temps que l'alumine par dépôt d'une solution d'alumine et de platine dans des conditions semblables à celles qui viennent d'être décrites.

Quelques exemples concrets de mise en œuvre de l'invention vont maintenant être donnés.

*Exemple 1:*

On trempe une plaque d'acier inoxydable et réfractaire (Cr 25% en poids, Ni 13% en poids) dans un bain de chromage, comportant 45 g/l d'acide chromique et 4,5 g/l d'acide sulfurique, à 31°C et pendant 4 min, sous une densité de courant de 20 A/dm². On dépose ainsi une couche de quelques microns de chrome. La plaque est ensuite protégée de l'oxydation par une couche de gomme soluble dans l'eau.

On pulvérise ensuite sur la plaque chauffée à 140°C une solution à 12% d'une alumine très fine (boehmite fibrillaire de surface spécifique supérieure à 200 m²/g).

La plaque est ensuite calcinée à 600°C. On dépose ainsi une couche d'alumine d'environ 10 μm résistant au décollement même au pliage et permettant l'imprégnation par les catalyseurs de post-combustion.

*Exemple 2:*

Cet exemple illustre une variante de l'invention dans laquelle la plaque, après le chromage, subit une phosphatation à l'aide d'une solution de phosphate monoaluminique. La couche d'alumine peut ensuite être déposée sans problème sur la couche de phosphate, notamment selon les procédés décrits plus haut, ces deux matériaux présentant une forte affinité chimique.

La plaque, du même type que dans l'exemple 1, est chromée dans les mêmes conditions puis protégée par une couche de gomme. La plaque est ensuite trempée pendant 2 h à 90°C dans une solution de $Al(H_2PO_4)_3$ à 50% en poids.

On pulvérise ensuite sur la plaque chauffée à 140°C une solution à 12% d'alumine du type de l'exemple 1.

La plaque est calcinée à 600°C.

On dépose ainsi une couche d'environ 15 μm.

*Exemple 3:*

Cet exemple illustre une autre variante de l'invention voisine de celle de l'exemple 2 dans laquelle on transforme le phosphate mono-aluminique en polyphosphate d'aluminium avant le dépôt de la couche d'alumine.

On utilise une plaque du même type que dans l'exemple 2 et on procède de la même manière que dans cet exemple jusqu'au trempage dans la solution de $Al(H_2PO_4)_3$.

Après ce trempage, la plaque est calcinée à 600°C pour former $(Al(PO_3)_3)_n$.

On pulvérise ensuite sur la plaque chauffée à 140°C une solution à 12% d'une alumine du type de l'exemple 1.

La plaque est ensuite calcinée à 600°C.

On dépose ainsi une couche d'alumine d'environ 10 μm.

Le support de catalyseur de l'invention convient tout particulièrement pour les catalyseurs de post-combustion, c'est-à-dire les catalyseurs permettant la purification ou le contrôle des gaz d'échappement des véhicules à moteur à combustion interne. Cependant, le support de l'invention peut être avantageusement utilisé pour des catalyseurs appliqués à d'autres domaines.

**Revendications**

1. Support de catalyseur, notamment de catalyseur de post-combustion du type comprenant un substrat métallique et une couche d'alumine déposée sur celui-ci, caractérisé en ce qu'il comporte en outre une couche de chrome disposée entre le substrat et la couche d'alumine, le substrat étant en acier.

2. Support de catalyseur selon la revendication 1, caractérisé en ce que le substrat est un acier inoxydable et réfractaire, notamment au nickel et au chrome.

3. Support de catalyseur selon la revendication 2, caractérisé en ce que l'acier précité a une teneur en poids en chrome de 25% et en nickel de 13%.

4. Support de catalyseur selon l'une quelconque des revendications précédentes, caractérisé en ce que la couche de chrome a une épaisseur de quelques μm environ, de préférence 1 μm.

5. Support de catalyseur selon l'une quelconque des revendications précédentes, caractérisé en ce que la couche d'alumine a une épaisseur de quelques dizaines de μm environ, de préférence de 10 à 30 μm.

6. Support de catalyseur selon l'une quelconque des revendications précédentes, caractérisé en ce que l'alumine est une bœhmite fibrillaire.

7. Support de catalyseur selon l'une quelconque des revendications précédentes, caractérisé en ce que le substrat est sous forme monolithe, notamment sous forme d'un monolithe ondulé et enroulé en spirale.

8. Procédé de fabrication d'un support de catalyseur, notamment de catalyseur de post-combustion, caractérisé en ce qu'on utilise un substrat en acier et en ce qu'on dépose d'abord une couche de chrome sur le substrat et ensuite une couche d'alumine sur ladite couche de chrome.

9. Procédé selon la revendication 8, caractérisé en ce qu'on réalise le dépôt de la couche d'alumine par pulvérisation de l'alumine sur le substrat chromé et chauffé ou par trempage dudit substrat dans une solution d'alumine.

10. Procédé selon la revendication 8 ou 9, caractérisé en ce qu'avant de déposer la couche d'alumine, on dépose sur le substrat chromé du phosphate mono-aluminique Al $(H_2PO_4)_3$, notamment par trempage du substrat dans une solution de ce composé.

11. Procédé selon la revendication 10, caractérisé en ce qu'après le dépôt du phosphate mono-aluminique, le substrat ainsi traité est calciné.

12. Procédé selon l'une quelconque des revendications 8 à 11, caractérisé en ce que l'on dépose sur le substrat une couche de chrome mat, notamment par électrolyse.

## Claims

1. Catalyst support, particularly for a post-combustion catalyst of the type incorporating a metal substrate and an alumina layer deposited on the latter, characterised in that it additionally comprises a chromium layer arranged between the substrate and the alumina layer, the substrate being steel.

2. Catalyst support according to Claim 1, characterised in that the substrate is a stainless and refractory steel, particularly containing nickel and chromium.

3. Catalyst support according to Claim 2, characterised in that the abovementioned steel has a weight content of chromium of 25% and of nickel of 13%.

4. Catalyst support according to any one of the preceding claims, characterised in that the chromium layer has a thickness of approximately a few μm, preferably 1 μm.

5. Catalyst support according to any one of the preceding claims, characterised in that the alumina layer has a thickness of approximately a few tens of μm, preferably from 10 to 30 μm.

6. Catalyst support according to any one of the preceding claims, characterised in that the alumina is a fibrillar boehmite.

7. Catalyst support according to any one of the preceding claims, characterised in that the substrate is in a monolith form, particularly in the form of an undulated monolith wound into a spiral.

8. Process for the manufacture of a catalyst support, particularly for a post-combustion catalyst, characterised in that a steel substrate is employed and a layer of chromium is first deposited on the substrate and then a layer of alumina is deposited on the said chromium layer.

9. Process according to Claim 8, characterised in that the deposit of the alumina layer is produced by spraying alumina on the chromium-plated and heated substrate or by soaking the said substrate in a solution of alumina.

10. Process according to Claim 8 or 9, characterised in that before the alumina layer is deposited mono-aluminium phosphate $Al(H_2PO_4)_3$ is deposited on the chromium-plated substrate, particularly by soaking the substrate in a solution of this compound.

11. Process according to Claim 10, characterised in that after the deposition of mono-aluminium phosphate the substrate thus treated is calcined.

12. Process according to any one of Claims 8 to 11, characterised in that a layer of matt chromium is deposited on the substrate, particularly by electrolysis.

## Patentansprüche

1. Träger für einen Katalysator, insbesondere einen Nachverbrennungskatalysator, des Typs, der ein metallisches Substrat und eine auf diesem abgelagerte Aluminiumoxidschicht umfasst, dadurch gekennzeichnet, dass er ausserdem eine zwischen dem Substrat und der Aluminiumoxidschicht abgelagerte Chromschicht enthält, wobei das Substrat aus Stahl besteht.

2. Träger für einen Katalysator nach Anspruch 1, dadurch gekennzeichnet, dass das Substrat ein nicht oxidierbarer hochtemperaturfester Stahl, insbesondere Nickel-/Chromstahl ist.

3. Träger für einen Katalysator nach Anspruch 2, dadurch gekennzeichnet, dass der Stahl einen Chromgehalt von 25 Gewichtsprozent und einen Nickelgehalt von 13 Gewichtsprozent besitzt.

4. Träger für einen Katalysator nach einem der vorangehenden Ansprüche, dadurch gekennzeichnet, dass die Chromschicht eine Dicke von einigen Mikrometern, vorzugsweise 1 μm besitzt.

5. Träger für einen Katalysator nach einem der vorangehenden Ansprüche, dadurch gekennzeichnet, dass die Aluminiumoxidschicht eine Dicke von einigen zehn Mikrometern, vorzugsweise von 10 bis 30 μm besitzt.

6. Träger für einen Katalysator nach einem der vorangehenden Ansprüche, dadurch gekennzeichnet, dass das Aluminiumoxid ein faseriger Boehmit ist.

7. Träger für einen Katalysator nach einem der vorangehenden Ansprüche, dadurch gekennzeichnet, dass das Substrat in monolithischer Form vorliegt, insbesondere in Form eines gewellten und zur Spirale aufgerollten Monolithen.

8. Verfahren zur Herstellung eines Trägers für einen Katalysator, insbesondere Nachverbrennungskatalysator, dadurch gekennzeichnet, dass man ein Stahlsubstrat verwendet, zunächst eine Chromschicht auf das Substrat und anschliessend auf diese Chromschicht eine Schicht von Aluminiumoxid aufbringt.

9. Verfahren nach Anspruch 8, dadurch gekennzeichnet, dass man die der Aluminiumoxidschicht durch Zerstäuben von Aluminiumoxid auf das erhitzte chromierte Substrat oder durch Eintauchen des Substrats in eine Lösung von Aluminiumoxid aufbringt.

10. Verfahren nach Anspruch 8 oder 9, dadurch gekennzeichnet, dass man vor der Aluminiumoxidschicht auf das chromierte Substrat Aluminiumdihydrogenphosphat aufbringt, insbesondere durch Eintauchen des Substrats in eine Lösung dieser Verbindung.

11. Verfahren nach Anspruch 10, dadurch gekennzeichnet, dass nach dem Aufbringen des Aluminiumdihydrogenphosphats das so behandelte Substrat calciniert wird.

12. Verfahren nach einem der Ansprüche 8 bis 11, dadurch gekennzeichnet, dass man insbesondere durch Elektrolyse, auf das Substrat eine matte Chromschicht aufbringt.